Europäisches Patentamt

(19) European Patent Office

Office européen des brevets

(11) Numéro de publication : **0 207 207**
**B1**

(12) **FASCICULE DE BREVET EUROPÉEN**

(45) Date de publication du fascicule du brevet :
**13.12.89**

(51) Int. Cl.⁴ : **A 01 J 11/12**

(21) Numéro de dépôt : **85401326.5**

(22) Date de dépôt : **01.07.85**

(54) **Appareil pour l'élimination des spores butyriques du lait par crémage.**

(43) Date de publication de la demande :
**07.01.87 Bulletin 87/02**

(45) Mention de la délivrance du brevet :
**13.12.89 Bulletin 89/50**

(84) Etats contractants désignés :
**AT DE IT NL**

(56) Documents cités :
**DE—C— 18 542**
**DE—U— 1 906 788**
**US—A— 1 512 908**

(73) Titulaire : **PIERRE GUERIN S.A.**
**B.P. 12**
**F-79210 Mauze sur le Mignon (FR)**

(72) Inventeur : **Vautier, Claude**
**28, rue de l'Ile**
**F-79270 Frontenay Rohan Rohan (FR)**

(74) Mandataire : **Fontanié, Etienne**
**FIVES-CAIL BABCOCK 38, rue de la République**
**F-93107 Montreuil Cédex (FR)**

EP 0 207 207 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne l'élimination des spores butyriques du lait pour son utilisation dans la fabrication des fromages.

Les accidents de fabrication de certains fromages dus à la fermentation butyrique créent un préjudice économique de plus en plus important à l'industrie fromagère par suite du développement considérable de l'utilisation de l'ensilage dans l'alimentation des vaches laitières. Parmi les procédés utilisés pour éliminer les spores butyriques, le crémage présente l'avantage d'être relativement peu coûteux à mettre en œuvre. Ce procédé, qui est décrit dans la TECHNIQUE LAITIERE n° 939 de Janvier 1980, p. 37, est basé sur la constatation que la crème en remontant entraîne avec elle une partie importante des spores butyriques ; il consiste à laisser reposer le lait pendant plusieurs heures dans une cuve puis à soutirer environ 80 à 85 % du lait qui est envoyé en fabrication, la presque totalité des spores butyriques étant retenue dans la partie surnageante. Etant donné que les deux phases ne sont pas nettement séparées, on est conduit par mesure de précaution à avoir une partie surnageante de volume important qui ne peut pas être utilisée en l'état pour la fabrication fromagère et dont l'élimination doit être compensée par un apport de crème « propre ».

Le but de la présente invention est de fournir un appareil permettant une élimination poussée des spores butyriques concentrées dans un volume de surnageant relativement faible.

L'appareil objet de la présente invention, constitué par une cuve cylindrique à axe vertical est caractérisé en ce qu'il comprend un dispositif collecteur constitué par une pluralité de coupelles régulièrement réparties sur la section droite de la cuve, à un même niveau, et supportées par des bras tubulaires fixés sur un tube vertical supérieur agencé téléscopiquement dans un tube vertical inférieur fixe, lesdits bras tubulaires reliant lesdites coupelles au tube vertical supérieur pour permettre l'évacuation par lesdits tubes de la crème collectée par les coupelles, et un mécanisme permettant de modifier la position en hauteur des coupelles dans la cuve. Le dispositif collecteur pourra comprendre en outre une coupelle centrale fixée directement sur le tube vertical supérieur. Le dispositif collecteur pourra, par exemple, être suspendu au câble d'un système de levage monté sur le couvercle de la cuve. La paroi de la cuve pourra avantageusement comporter, dans sa partie supérieure, des moyens d'échange thermique permettant de porter la phase surnageante à une température convenable, après décantation et d'éviter que les matières grasses ne restent collées à la paroi, ces moyens pourront comprendre un serpentin ou une double enveloppe où l'on fera circuler un fluide à la température voulue.

D'autres caractéristiques de l'invention apparaîtront à la lecture de la description qui suit et se réfère aux dessins l'accompagnant qui montrent, à titre d'exemple non limitatif un mode de réalisation de l'invention et sur lesquels :

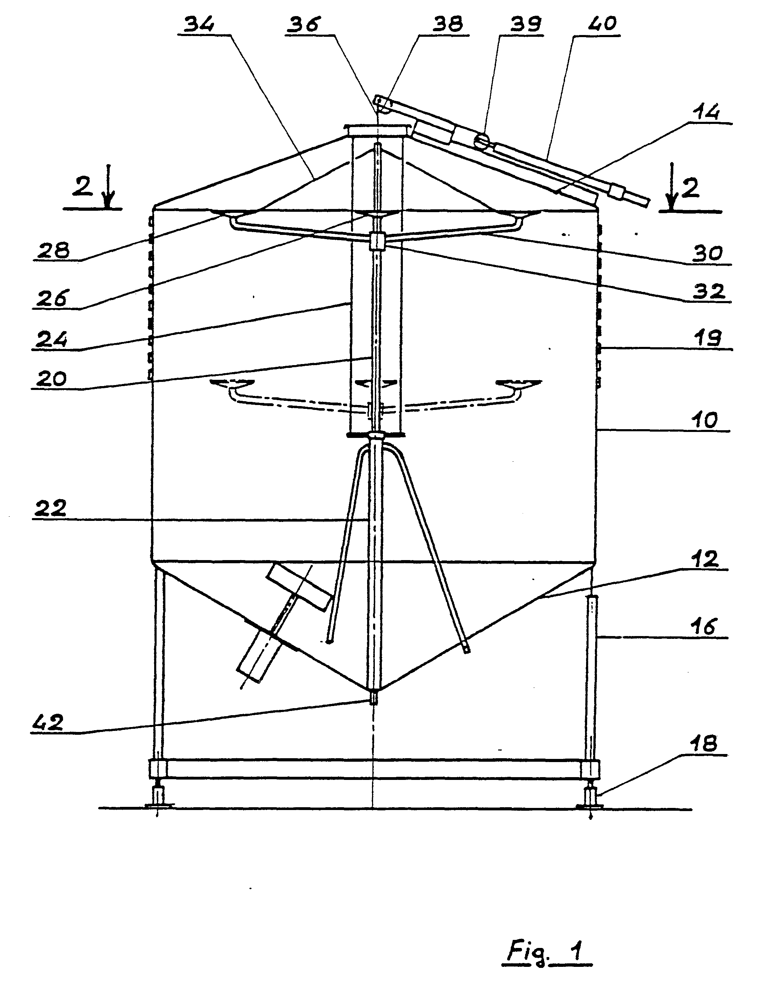

La figure 1 montre en élévation et en coupe un appareil conforme à l'invention, et

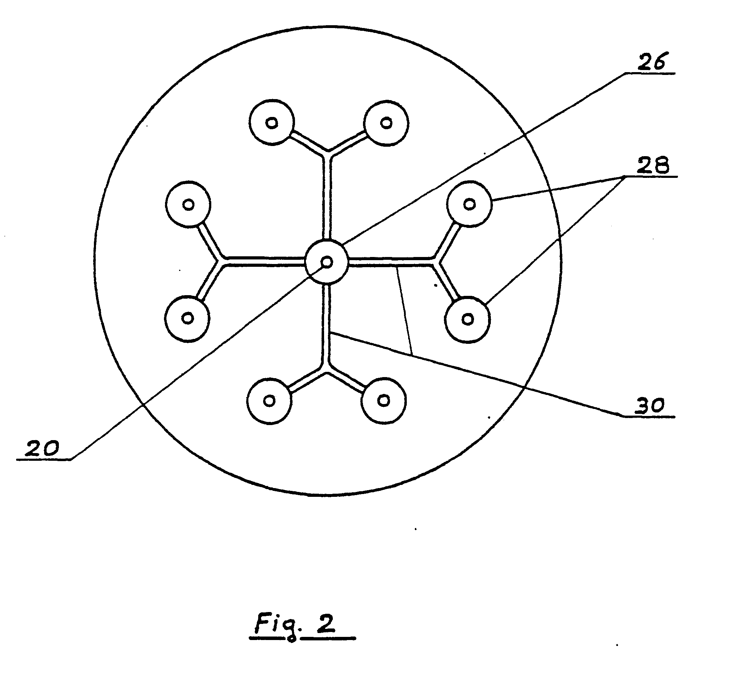

La figure 2 est une coupe suivant 2-2 de cet appareil.

L'appareil représenté sur les dessins est constitué par une cuve fermée cylindrique 10, à axe vertical et à section circulaire munie d'un fond 12 et d'un couvercle 14 coniques ; elle comporte à sa base une jupe 16 reposant sur le sol par l'intermédiaire de pesons 18. Un serpentin 19 fixé extérieurement sur la partie supérieure de la cuve permet d'amener, après décantation, la phase surnageante à température convenable par circulation d'un fluide de réchauffage et d'éviter que les matières grasses ne restent collées à la paroi de la cuve.

Cette cuve est équipée d'un dispositif permettant de collecter et d'évacuer par débordement la crème qui surnage lorsqu'on a laissé reposer le lait contenu dans la cuve pendant un certain temps. Ce dispositif est constitué par une série de coupelles montées sur un tube vertical 20 disposé dans l'axe de la cuve et agencé téléscopiquement dans un tube vertical 22 fixé sur le fond de la cuve. Le tube vertical 22 est également soutenu par des tirants 24 accrochés au couvercle de la cuve. La coupelle centrale 26 est fixée directement sur le tube 20, coaxialement à celui-ci, et des trous percés dans le tube, près du fond de la coupelle, permettent l'évacuation du liquide collecté par la coupelle. Huit autres coupelles 28 sont disposées autour de l'axe de la cuve, à l'écart de celui-ci et de la paroi de la cuve et supportées par quatre bras tubulaires 30 raccordés au tube 20 par l'intermédiaire d'un manchon 32. A leur extrémité les bras 30 se divisent en deux branches dont chacune supporte une coupelle. Ces branches sont munies à leur extrémité d'une bride horizontale sur laquelle vient se fixer une bride prévue sur le fond de la coupelle autour d'une ouverture centrale permettant l'évacuation du liquide collecté par les coupelles vers le tube 20, à travers les bras tubulaires 30. Les coupelles 26 sont également soutenues par des haubans 34 accrochés à l'extrémité supérieure du tube 20 et munis de tendeurs. Les bords de toutes les coupelles 26 et 28 sont situés au même niveau.

Le dispositif de collecte et d'évacuation est suspendu au couvercle de la cuve au moyen d'un câble 36 dont une extrémité est accrochée au tube 20, qui passe sur une première poulie 38 montée sur le couvercle et sur une seconde poulie 39 fixée à l'extrémité de la tige d'un vérin 40 et dont l'autre extrémité est fixée au couvercle. En commandant le vérin 40 on peut faire monter et descendre le dispositif, le tube 20 coulissant dans le tube 22.

La cuve comporte évidemment un orifice de remplissage et un orifice de vidange et est équipée des moyens de lavage habituels ; une sortie 42 est en outre prévue à l'extrémité inférieure du tube 22 pour l'évacuation du produit collecté par les coupelles.

Après remplissage de la cuve on laisse reposer le lait pendant plusieurs heures pour laisser remonter la crème qui entraîne dans son mouvement ascendant les spores butyriques. Pendant cette période le dispositif collecteur est maintenu en position haute de telle sorte que le bord des coupelles se trouve au-dessus du niveau de la surface libre du liquide. Au bout de cette période la plus grande partie des spores butyriques est concentrée dans la crème qui surnage. On fait alors descendre le dispositif collecteur jusqu'à ce que le bord des coupelles se trouve au-dessous du niveau de la surface libre ; la crème se déverse dans les coupelles et est évacuée par les tubes 30, 20 et 22. Au moyen du vérin 40 on contrôle en continu la descente du dispositif collecteur qui doit être suffisamment lente pour que les courants qui naissent dans la partie surnageante de la masse liquide ne risquent pas de créer une agitation susceptible de remélanger la crème et le lait. Quant toute la crème est évacuée, on relève le dispositif collecteur et on peut alors soutirer le lait.

De nombreuses modifications peuvent être apportées à la forme de réalisation décrite, notamment en ce qui concerne la forme, le nombre et la disposition des coupelles, la conception du mécanisme de levage, etc... et il doit être entendu que toutes ces modifications entrent dans le cadre de l'invention, telle que définie par les revendications suivantes.

**Revendications**

1. Appareil pour l'élimination des spores butyriques du lait par crémage constitué par une cuve cylindrique à axe vertical caractérisé en ce qu'il comprend un dispositif collecteur constitué par une pluralité de coupelles (28) régulièrement réparties sur la section horizontale de la cuve (10), à un même niveau, et supportées par des bras tubulaires (30) fixés sur un tube vertical supérieur (20) agencé téléscopiquement dans un tube vertical inférieur fixe (22), lesdits bras tubulaires reliant lesdites coupelles au tube vertical supérieur pour permettre l'évacuation par lesdits tubes de la crème collectée par les coupelles, et un mécanisme (36-40) permettant de modifier la position en hauteur des coupelles dans la cuve.

2. Appareil selon la revendication 1, caractérisé en ce que le dispositif collecteur comprend en outre une coupelle centrale (26) fixée directement sur le tube vertical supérieur (20).

3. Appareil selon la revendication 1 ou 2, caractérisé en ce que le dispositif collecteur est suspendu au câble (36) d'un système de levage (40) monté sur le couvercle (14) de la cuve.

4. Appareil selon la revendication 1, 2 ou 3, caractérisé en ce que la paroi de la cuve (10) comporte, dans sa partie supérieure, des moyens d'échange thermique (19).

**Claims**

1. Apparatus for eliminating butyric spores by skimming the milk consisting of a vertical axis cylindrical vat characterized in that it includes a collecting device consisting of a number of cups (28) regularly distributed in the horizontal cross-section of the vat (10), on a single level, and supported by tubular arms (30) fastened to an upper vertical tube (20) arranged telescopically in a fixed lower vertical tube (22), the said tubular arms connecting the said cups to the upper vertical tube so as to enable the discharge through the said tubes of the cream collected by the cups, and a mechanism (36-40) enabling to change the position in height of the cups in the vat.

2. Apparatus according to claim 1, characterized in that the collecting device also includes a central cup (26) directly fixed to the upper vertical tube (20).

3. Apparatus according to claims 1 or 2, characterized in that the collecting device is hanging from the cable (36) of a lifting system (40) mounted on the top (14) of the vat.

4. Apparatus according to claims 1, 2 or 3, characterized in that the upper part of the wall of vat (10) includes means of thermal exchange (19).

**Patentansprüche**

1. Einrichtung zum Eliminieren der Buttersäuresporen durch Entrahmen der Milch, bestehend aus einer zylindrischen Wanne mit vertikaler Achse, dadurch gekennzeichnet, dass sie eine Sammelvorrichtung umfasst, die aus einer Vielzahl von auf derselben Höhe gleichmässig auf den horizontalen Querschnitt der Wanne (10) verteilten Schälchen (28) besteht, die von rohrförmigen Armen (30) getragen werden, welche an einem teleskopisch in einem vertikalen Unterrohr (22) untergebrachten vertikalen Oberrohr (20) befestigt sind, wobei besagte rohrförmige Arme besagte Schälchen mit dem vertikalen Oberrohr verbinden, um das Ableiten des von den Schälchen gesammelten Rahms durch besagte Rohre zu erlauben, sowie einen Mechanismus (36-40), welcher die Änderung der Höhenlage der Schälchen in der Wanne erlaubt.

2. Einrichtung gemäss Anspruch 1, dadurch gekennzeichnet, dass die Sammelvorrichtung ferner ein zentrales Schälchen (26) umfasst, das direkt auf dem vertikalen Oberrohr (20) befestigt ist.

3. Einrichtung gemäss Anspruch 1 bzw. 2, dadurch gekennzeichnet, dass die Sammelvorrichtung am Seil (36) eines auf den Deckel (14) der Wanne montierten Hubsystems (40) aufgehängt ist.

4. Einrichtung gemäss Anspruch 1, 2 bzw. 3, dadurch gekennzeichnet, dass die Wand der Wanne (10) an ihrem Oberteil mit Wärmeaustauschmitteln (19) versehen ist.

*Fig. 1*

Fig. 2